# EUROPEAN PATENT SPECIFICATION

(11) **EP 1 365 549 B1**
(45) Date of publication and mention of the grant of the patent: **09.09.2009**
(21) Application number: 03011657.8
(22) Date of filing: 22.05.2003
(51) Int. Cl.: H04L 12/56, H04B 1/707, H04L 1/00

(54) **Random access method and radio station**
Direktzugriffsverfahren und Funkstation
Procédé d'accès aléatoire et station radio

(30) Priority: 22.05.2002 JP 2002148054
(43) Date of publication of application: 26.11.2003
(73) Proprietor: NTT DoCoMo, Inc., Tokyo 100-6150 (JP)
(72) Inventor: Kayama, Hidetoshi, Chiyoda-ku, Tokyo 100-6150 (JP); Chen, Lan, Chiyoda-ku, Tokyo 100-6150 (JP); Kitazawa, Daisuke, Chiyoda-ku, Tokyo 100-6150 (JP); Umeda, Narumi, Chiyoda-ku, Tokyo 100-6150 (JP)
(74) Representative: Viering, Jentschura & Partner

(56) References cited:
- EP-A- 1 128 579
- WO-A-00/64373
- WO-A-01/89162
- WO-A-95/07578
- US-A1- 2001 017 851

## Description

### BACKGROUND OF THE INVENTION

### Field of the Invention

The present invention relates to a random access method and a radio station, and more particularly, to a random access method executed in a CDMA packet communication system comprising a plurality of radio stations having a function of transmitting and receiving packets on a wireless section to and from each other by code division multiple access and a function of performing transmission power control during transmission and reception of packets, and a radio station forming the CDMA packet communication system.

It should be noted that "radio stations" in the present specification encompass both base stations and mobile stations (e.g., PDA, cellular phone, PHS, portable personal computer, etc.).

### Related Background Art

In the CDMA packet communication, different from the conventional TDMA or FDMA radio packet communications, even when a plurality of packets are simultaneously transmitted, the receiving station can decode them as long as each despread packet satisfies the required signal to interference ratio. For taking advantage of this property of CDMA, it is necessary to control an interference power to each packet to below a threshold, i.e., to control the number of packets concurrently transmitted, below a certain number. It is thus common practice to use a method of effecting the control by letting the base stations estimate the traffic by channel load sensing and transmit a transmit permission probability of a random access signal according thereto.

One of the random access methods applying it is CDMA-PRMA (Packet Reservation Multiple Access). In this method, a channel is divided into slots and a frame consists of a plurality of slots. Each packet first makes access through a randomly selected slot by slotted ALOHA and the base station side, if successfully receiving it, reserves resources of the same slots in subsequent frames, whereby it becomes feasible to transmit the rest data.

However, if interference becomes strong over a permitted interference level because of congestion of packets transmitted by slotted ALOHA, the signal to interference ratios of packets transmitted through the reserved slots will come to fail to satisfy the specified value, resulting in an extreme drop in error rates. Then, the base station calculates the transmit permission probability of packets by slotted ALOHA in each slot on the basis of the number of packets reserved in the slot, and broadcasts it to mobile stations. A mobile station determines whether channel access by slotted ALOHA to the slot should be made, based on the transmit permission probability.

On the other hand, Active Link Protection is known as a technique of protecting a link in communication. As described previously, CDMA permits a plurality of signals to be concurrently transmitted at the same frequency, while the signals other than a signal of interest exert interference powers on the signal of interest. For this reason, when a new signal B is transmitted during transmission of a certain signal A, the signal B is added as an interference wave to the signal A. If at this time the ratio of the reception power of the signal A under transmission to the interference power after the addition of the interference power due to the signal B falls below a predetermined threshold, the signal A under transmission will be likely to end in an error.

Active Link Protection adopts two approaches below to reducing such error. The first approach is a technique of performing the transmission power control so as to satisfy target Eb/No resulting from addition of a given margin to required Eb/No (the ratio of energy per bit to the spectral noise density in a digital modulation signal). This provides each signal with some resistance to variation of interference power. The second approach is a technique of increasing the transmission power stepwise from the start of transmission of signals. This makes it feasible to prevent Eb/No from falling under the required value because of the transmission power control on the link under communication, even in the case where interference increases upon occurrence of a new signal.

In the aforementioned CDMA-PRMA, the base station controls the traffic load of packets from terminals under control of its own by use of the transmit permission probability of packets, whereby it can control the interference power in an arbitrary slot so as not to exceed the permitted value. It is, however, generally the case that in mobile communication the service areas spread two-dimensionally and in CDMA the same frequency channel might be used in all the cells, and it is thus necessary to take interference powers from adjacent cells into consideration.

In the CDMA-PRMA, however, since no transmission control is made over the adjacent cells at all, there could occur a case where the required Eb/No is not assured because of the interference from the adjacent cells.

In contrast to it, Active Link Protection provides each link with some margin to the interference waves from both inside and outside the cell, and the transmission power control can handle increase and decrease of the interference waves; therefore, it is feasible to prevent the increase in the error rate due to the interference from the adjacent cells.

Even with the use of this method, however, the state of failing to ensure the required Eb/No can result if the constraints on the transmission power of the terminal cause the interference power to exceed a certain level. Particularly, in the packet communication, there can occur a case where an extremely large number of packets flock within a short period of time, so as to fail to satisfy the required

In addition, the transmission power is generally increased or decreased in relatively small steps during the transmission power control. Therefore, while the interference waves are largely reduced after completion of transmission of a packet having been transmitted in a large power, the other packets under transmission are continuously transmitted in higher powers than necessary during the period in which the transmission power is decreased stepwise by the transmission power control. This can be a factor of decreasing the efficiency of utilization of radio resources.

The present invention has been accomplished in order to solve the above problem and an object of the invention is to provide a random access method and a radio station, which are capable of suppressing the interference to the other packets under transmission and decreasing the error rate of packets. According to prior art document EP1128579 a CDMA mobile communication system is provided in which in a case where packet data relating to one call is transmitted by wireless through a plurality of data channels by sharing predetermined control information, even when a transmission operation is permitted only in a case where the packet data exists, an abrupt change of transmission power can be suppressed. A transmitting station inhibits data transmission until the packet data is generated. In a case where the packet data is generated in such a state, the transmitting station starts data transmission through a first data channel IDCH1 in response to this. Thereafter, every time one frame has passed, the transmitting station sequentially starts data transmission through a second, a third and a fourth data channels IDCH2, IDCH3 and IDCH4. By this, an abrupt increase of the transmission power can be suppressed as compared with a case where the data transmission through all the data channels IDCH1 to ICDH4 is started at the same time.

According to prior art document WO0064373 a rate assignment circuitry (102) detects when a data transmission begins and originally assigns an Orthogonal Variable Spreading Factor (OVSF) code corresponding to low data rate. Over time, a base station controller (101) determines when an OVSF code and/or a repetition rate should be changed (i.e., data rate increased or decreased). The OVSF code and/or the repetition rate is changed in order to gradually increase the data rate, up to a maximum allowable data rate. Once data transmission ceases for a period of time the OVSF code and/or the repetition rate is changed in order to gradually decrease the data rate, down to a lowest allowable data rate.

According to prior art document US2001017851 in a mobile communication system having a plurality of radio packet channels of different transmission rate with each other between a base station and a mobile station, undesirable interference to adjacent cells of adjacent base stations is decreased. Signal quality of a receive signal at a mobile station is measured, and the better said signal quality is, the higher packet channel is assigned. Thus, although signal quality is poor because of long distance between a base station and a mobile station, no increase of transmission power of a base station is requested. Thus, interference to adjacent cells is decreased. When high rate packet channel is selected, short packet transmission time may be assigned so that amount of data transmission is kept uniform in spite of said signal quality.

Prior art document WO9507578 discusses a method and apparatus for controlling the data rates for communications to and from a base station (2) and a plurality of remote users (4). The usage of the communications resource whether the forward link resource, from base station (2) to remote users (4), or reverse link resource, from remote users (4) to base station (2), is measured. The measured usage value is compared against at least one predetermined threshold value and the data rates of communications or a subset of communications on said communications resource is modified in accordance with said comparisons.

This prior art leaves room for improvements in the area of interference and power control.

### SUMMARY OF THE INVENTION

A random access method not forming part of the present invention is a random access method executed in a CDMA packet communication system comprising a plurality of radio stations having a function of transmitting and receiving packets on a wireless section to and from each other by code division multiple access and a function of performing transmission power control during transmission and reception of packets, wherein, on the occasion of concurrently transmitting a plurality of packets, the radio station assigns different spreading codes to the respective packets and shifts transmission start times of the individual packets assigned the different spreading codes, each by a predetermined period of time.

A radio station not forming part of the present invention is a radio station having a function of transmitting and receiving packets on a wireless section to and from another radio station by code division multiple access and a function of performing transmission power control during transmission and reception of packets, the radio station comprising: spreading code assigning means for, on the occasion of concurrently transmitting a plurality of packets, assigning different spreading codes to the respective packets; and start time controlling means for shifting transmission start times of the individual packets assigned the different spreading codes, each by a predetermined period of time.

According to an example, the transmission start times are shifted so as to transmit the packets in an overlapping state and increase the number of overlapping packets gradually from the start of transmission; therefore, the transmission power in the radio channel can be increased stepwise. For this reason, it becomes feasible to prevent excessive interference to the other packets under transmission and to secure a time enough to perform the transmission power control against increase of interference waves, thereby decreasing the error rate of packets.

In the above, the predetermined period of time is desirably set longer than a period in which the transmission power control is performed. Namely, the transmission power of each packet is increased or decreased in a step greater than the period of the transmission power control, and execution of the transmission power control enables the other under-transmission packets to avoid being affected by interference waves due to the other under-transmission packets, regardless of whether a source of the interference waves is located inside or outside the cell. The execution of the above transmission power control also permits the other under-transmission packets after transmission of an arbitrary packet to avoid continuously being transmitted in transmission powers stronger than necessary, thereby increasing the frequency efficiency.

A random access method not forming part of the present invention is desirably configured so that the radio station determines whether a total reception power in a receive channel exceeds a predetermined threshold and, when the total reception power exceeds the threshold, the radio station broadcasts a transmission regulation signal for ordering a predetermined operation of regulating packet transmission, to neighbor radio stations, and so that each neighbor radio station in transmission of packets, when receiving the transmission regulation signal, suspends transmission of a new packet or lengthens the predetermined period of time as a shift width of the transmission start times on the basis of the contents indicated by the transmission regulation signal.

A radio station not forming part of the present invention is configured to comprise reception power determining means for determining whether a total reception power in a receive channel exceeds a predetermined threshold; signal broadcasting means for, when the total reception power exceeds the threshold, broadcasting a transmission regulation signal for ordering a predetermined operation of regulating packet transmission, to neighbor radio stations; and first transmission regulation controlling means for, when receiving the transmission regulation signal from another radio station during packet transmission, performing such control as to suspend transmission of a new packet or lengthen the predetermined period of time as a shift width of the transmission start times on the basis of the contents indicated by the transmission regulation signal.

When an example is applied so as to suspend the packet transmission itself or lengthen the predetermined period of time as a shift width of the transmission start times, it becomes feasible to decrease the interference level in the radio channel. For example, when the receive channel suffers interference too strong to be avoided even by the transmission power control, the traffic load of the radio station is lowered to an appropriate value, whereby the error rate of packets can be prevented from seriously increasing.

Another random access method not forming part of the present invention is a random access method executed in a CDMA packet communication system comprising a plurality of radio stations having a function of transmitting and receiving packets on a wireless section to and from each other by code division multiple access and a function of performing transmission power control during transmission and reception of packets, wherein, on the occasion of continuously transmitting a plurality of packets, the radio station gradually increases a transmission rate of each packet.

Another radio station not forming part of the present invention is a radio station having a function of transmitting and receiving packets on a wireless section to and from another radio station by code division multiple access and a function of performing transmission power control during transmission and reception of packets, the radio station comprising: transmission rate controlling means for, on the occasion of continuously transmitting a plurality of packets, gradually increasing a transmission rate of each packet.

According to an example, the transmission rate is gradually increased by making use of the fact that the required transmission power varies according to the transmission rate in the case of the CDMA packets; therefore, the transmission power in the radio channel can be increased stepwise. For this reason, it becomes feasible to prevent excessive interference to the other packets under transmission and to secure a time enough to perform the transmission power control against increase of interference waves, thereby decreasing the error rate of packets.

A random access method not forming part of the present invention is configured so that the radio station determines whether a total reception power in a receive channel exceeds a predetermined threshold and, when the total reception power exceeds the threshold, the radio station broadcasts a transmission regulation signal for ordering a predetermined operation of regulating packet transmission, to neighbor radio stations, and so that each neighbor radio station in transmission of packets, when receiving the transmission regulation signal, suspends transmission of a new packet or lowers a transmission rate of a subsequent packet on the basis of the contents indicated by the transmission regulation signal.

The radio station not forming part of the present invention is configured to comprise reception power determining means for determining whether a total reception power in a receive channel exceeds a predetermined threshold; signal broadcasting means for, when the total reception power exceeds the threshold, broadcasting a transmission regulation signal for ordering a predetermined operation of regulating packet transmission, to neighbor radio stations; and second transmission regulation controlling means for, when receiving the transmission regulation signal from another radio station during packet transmission, performing such control as to suspend transmission of a new packet or lower a transmission rate of a subsequent packet on the basis of the contents indicated by the transmission regulation signal.

When an example is applied so as to suspend the packet transmission itself or adjust the transmission rate, it becomes feasible to decrease the interference level in the radio channel. For example, when the receive channel suffers interference too strong to be avoided even by the transmission power control, the traffic load of the radio station is lowered to an appropriate value, whereby the error rate of packets can be prevented from seriously increasing.

In order to achieve the above object, the random access method according to the present invention is a random access method executed in a CDMA packet communication system comprising a plurality of radio stations having a function of transmitting and receiving packets on a wireless section to and from each other by code division multiple access and a function of performing transmission power control during transmission and reception of packets, wherein, on the occasion of concurrently and continuously transmitting a plurality of packets, the radio station gradually increases the number of packets concurrently transmitted.

The radio station according to the present invention is a radio station having a function of transmitting and receiving packets on a wireless section to and from another radio station by code division multiple access and a function of performing transmission power control during transmission and reception of packets, the radio station comprising: number-of-transmitted-packets controlling means for, on the occasion of concurrently and continuously transmitting a plurality of packets, gradually increasing the number of packets concurrently transmitted.

According to the aspects of the invention, the number of packets concurrently transmitted is gradually increased, whereby the transmission power in the radio channel can be increased stepwise. For this reason, it becomes feasible to prevent excessive interference to the other packets under transmission and to secure a time enough to perform the transmission power control against increase of interference waves, thereby decreasing the error rate of packets.

The random access method according to the present invention is preferably configured so that the radio station determines whether a total reception power in a receive channel exceeds a predetermined threshold and, when the total reception power exceeds the threshold, the radio station broadcasts a transmission regulation signal for ordering a predetermined operation of regulating packet transmission, to neighbor radio stations, and so that each neighbor radio station in transmission of packets, when receiving the transmission regulation signal, suspends transmission of a new packet or decreases the number of packets concurrently transmitted, on the basis of the contents indicated by the transmission regulation signal.

The radio station according to the present invention is desirably configured to comprise reception power determining means for determining whether a total reception power in a receive channel exceeds a predetermined threshold; signal broadcasting means for, when the total reception power exceeds the threshold, broadcasting a transmission regulation signal for ordering a predetermined operation of regulating packet transmission, to neighbor radio stations; and third transmission regulation controlling means for, when receiving the transmission regulation signal from another radio station during packet transmission, performing such control as to suspend transmission of a new packet or decrease the number of packets concurrently transmitted, on the basis of the contents indicated by the transmission regulation signal.

When the aspects of the invention are applied so as to suspend the packet transmission itself or decrease the number of packets simultaneously transmitted, it becomes feasible to decrease the interference level in the radio channel. For example, when the receive channel suffers interference too strong to be avoided even by the transmission power control, the traffic load of the radio station is lowered to an appropriate value, whereby the error rate of packets can be prevented from seriously increasing.

### BRIEF DESCRIPTION OF THE DRAWINGS

Fig. 1 is a system configuration diagram in the embodiment.
Fig. 2A is a configuration diagram of the mobile station in the first example.
Fig. 2B is a configuration diagram of the mobile station in the second example.
Fig. 2C is a configuration diagram of the mobile station in the embodiment.
Fig. 3 is a diagram showing the packet transmission operation in the first example.
Fig. 4 is a diagram showing the operation of packet transmission regulation in the first example.
Fig. 5 is a table showing the relationship of signal types with the packet transmit permission probabilities and suspension times in the first example.
Fig. 6 is a chart showing the transmission operation of the mobile station in the first example.
Fig. 7 is a diagram showing the packet transmission operation in the second example.
Fig. 8 is a diagram showing the operation of packet transmission regulation in the second example.
Fig. 9 is a table showing the relationship of signal types with the maximum transmission rates and transmit permission probabilities in the second example.
Fig. 10 is a chart showing the transmission operation of the mobile station in the second example.
Fig. 11 is a diagram showing the packet transmission operation in the embodiment.
Fig. 12 is a diagram showing the operation of packet transmission regulation in the embodiment.
Fig. 13 is a table showing the relationship of signal types with the maximum numbers of simultaneously transmitted packets and transmit permission probabilities in the embodiment.
Fig. 14 is a diagram showing the transmission operation of the mobile station in the embodiment.

### DESCRIPTION OF THE PREFERRED EMBODIMENTS

A variety of examples and an embodiment of the present invention will be described below.

### [First Example]

The first example will describe an example not forming part of the present invention directed to the first random access method and to the radio station and CDMA communication system corresponding thereto.

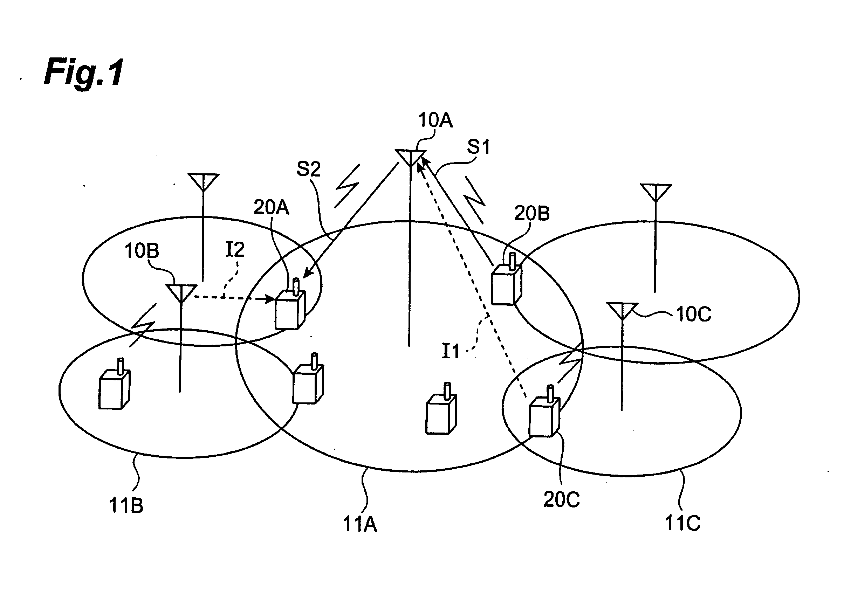

Fig. 1 shows a configuration example of the CDMA communication system according to the present example. In this system, radio stations 10 (e.g., radio stations 10A, 10B, 10C,...) with a base-station function form their respective cells 11A, 11B, and 11C. In the description hereinafter, the radio stations 10 with the base-station function will be referred to as "base stations 10" for convenience' sake of description, and it is noted that the radio stations encompass both the so-called base stations, and mobile stations with the base-station function. The mobile stations with the base-station function use this function on the occasion of transmitting a received signal to another radio station.

Each cell accommodates one or more mobile stations 20 (e.g., mobile stations 20A, 20B, 20C,...), and each mobile station 20 is performing packet communication on CDMA channels with the base station 10 forming the cell to which the mobile station 20 in question belongs. Here the CDMA channels use the same frequency in all the cells and, for this reason, for example, at the base station 10A a desired wave S1 from the mobile station 20B in its own cell 11A can interfere with an interference wave I1 from the mobile station 20C in the adjacent cell 11C. As for downlinks (in the direction from the base station to the mobile station), for example, at the mobile station 20A belonging to the cell 11A, a desired wave S2 from the base station 10A can also interfere with an interference wave 12 from the base station 10B in the adjacent cell 11B.

The radio stations not forming part of the present invention correspond to all stations performing radio packet transmission in the above communication system of Fig. 1 (including both the base stations and mobile stations), and in the example below, the packet transmission control operation in the mobile station 20 will be described as an operation associated with the random access method according to the example.

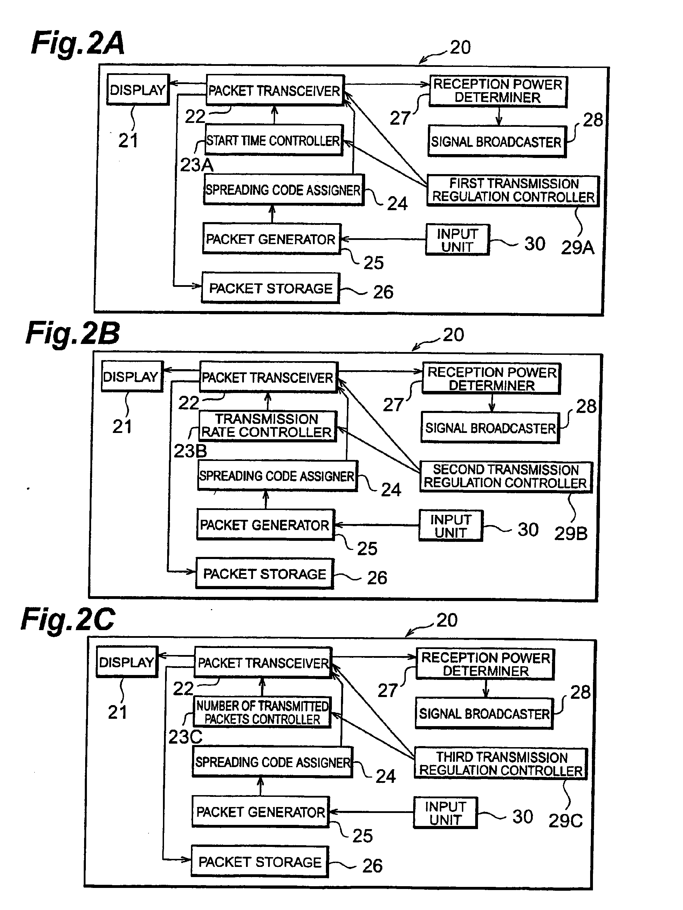

Fig. 2A shows a configuration according to the example in the mobile station 20 of the present example. As shown in this Fig. 2A, the mobile station 20 has a function of carrying out the packet communication in the CDMA system and a function of performing the transmission power control during transmission and reception of packets, and is provided with the following components. Namely, the mobile station 20 is comprised of: an input unit 30 for execution of predetermined instruction operation, input operation, etc. about packet transmission; a packet generator 25 incorporating a transmission buffer and configured to generate packets to be transmitted (transmitted packets) and store them in the transmission buffer; a packet transceiver 22 provided with a plurality of channels and configured to transmit and receive packets on a wireless section to and from another radio station by code division multiple access; a spreading code assigner 24 configured to, on the occasion of concurrently transmitting a plurality of packets, assign different spreading codes to the respective packets; a start time controller 23A for performing such control as to shift transmission start times of the individual packets assigned the different spreading codes, each by a predetermined period of time; a reception power determiner 27 for determining whether a total reception power in a receive channel exceeds a predetermined threshold; a signal broadcaster 28 for, when it is determined that the total reception power became over the threshold, broadcasting a transmission regulation signal for ordering a predetermined operation of regulating packet transmission, to neighbor radio stations; a first transmission regulation controller 29A for, when receiving the transmission regulation signal from another radio station during packet transmission, performing such control as to suspend transmission of a new packet or lengthen the predetermined period of time as a shift width of the transmission start times on the basis of the contents indicated by the transmission regulation signal; a packet storage 26 for storing received packet data; and a display unit 21 for displaying the contents of the received packet data.

The above configuration is characterized in that the predetermined period of time, which is equivalent to a shift amount of the packet transmission start times by the start time controller 23A, is set longer than the period in which the transmission power control is performed.

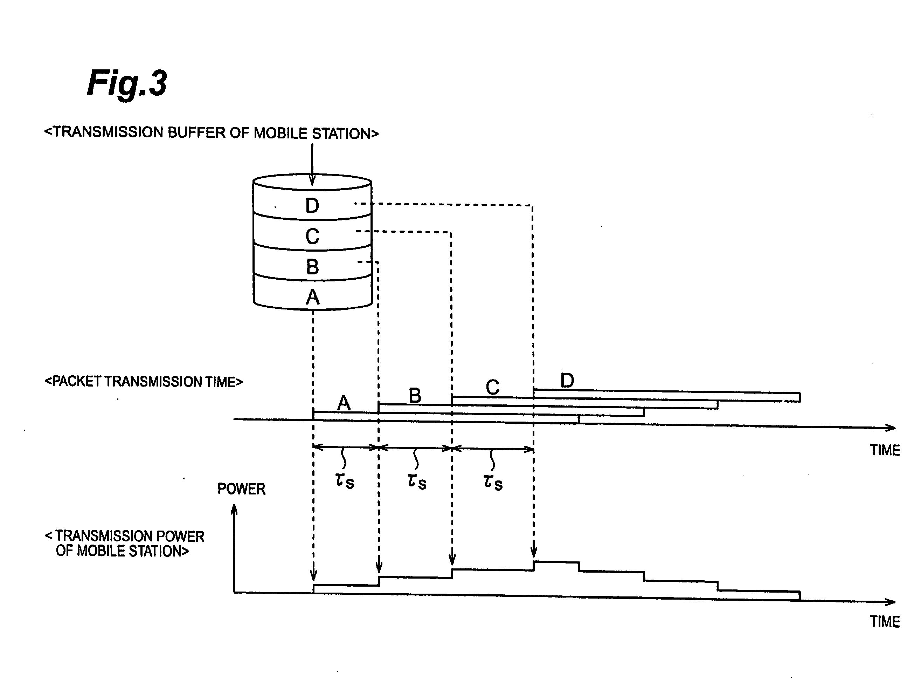

Fig. 3 shows the operation of packet transmission in the present example. Now let us suppose that transmitted packets A to D are stored in the transmission buffer in the packet generator 25 of the mobile station 20, as shown in the upper part of Fig. 3. As shown in the middle part of Fig. 3, the mobile station 20 first starts transmitting the packet A and then starts transmitting the packet B after a predetermined period of time τₛ. Thereafter, the mobile station starts transmitting the packets C, D in order at intervals of the same predetermined time period τₛ.

Here each packet is assigned an individual code and each packet is transmitted at a relatively low transmission rate; therefore, when the predetermined time period τₛ is set sufficiently short, the packets are transmitted in an overlapping state and the transmission power of the mobile station 20 is in a gently stepped state, as shown in the lower part of Fig. 3. In the present example, since the period of the transmission power control is set shorter than the foregoing predetermined period of time τₛ, Eb/No can be maintained at or above the required value by increasing the power of the desired wave in the transmission power control, even in the case where the transmitted signals of the other packets concurrently transmitted work as interference waves.

Although the present example describes the transmission from the mobile station 20, it is needless to mention that this transmission method is also applicable to transmission from the base station 10.

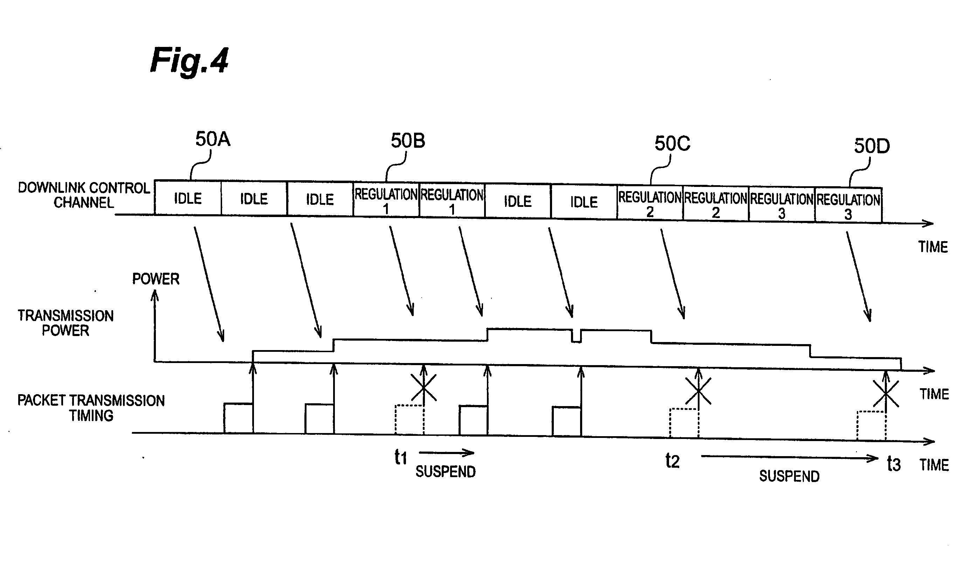

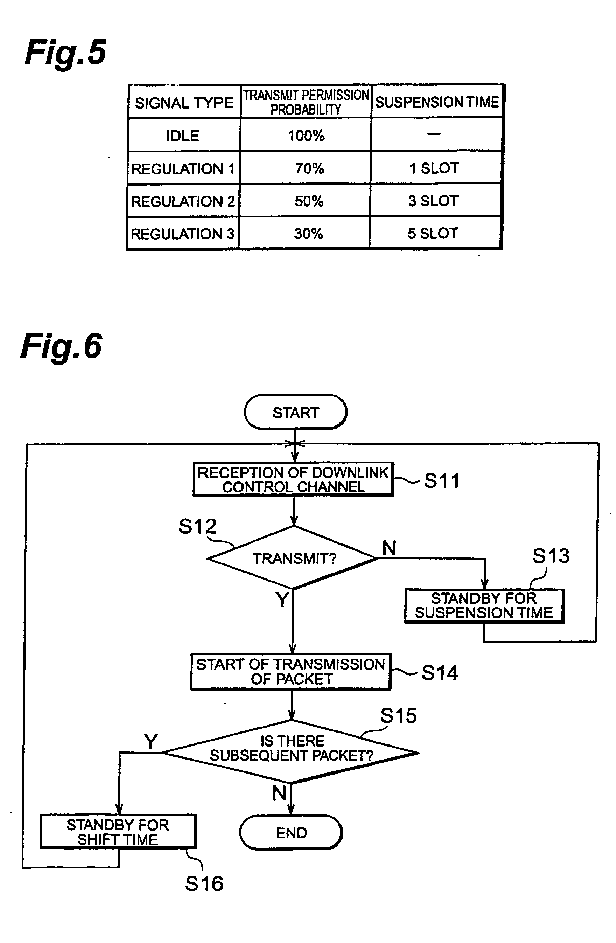

The outline of the operation for preventing abnormal increase of the interference waves due to congestion of packets will be described below with reference to Figs. 4 and 5. The base station 10 broadcasts a downlink control channel shown in the upper part of Fig. 4, and the base station 10 selectively transmits one of an idle control signal 50A, a control signal 50B of regulation 1, a control signal 50C of regulation 2, and a control signal 50D of regulation 3 according to the intensity of the reception power in an uplink channel.

The mobile station 20 refers to the broadcast control signal upon transmission of a packet and controls the transmission of the packet, based on control information about a transmit permission probability and a suspension time for suspension of transmission as described in Fig. 5.

For example, on the occasion of transmission at the transmission timing t1 in the lower part of Fig. 4, the mobile station 20 confirms that the control signal 50B of regulation 1 is broadcast in the downlink control channel, and determines whether to immediately transmit the packet or to suspend the transmission thereof, on the basis of a random number generated inside. When the transmission is suspended, the mobile station 20 stands by for the suspension time (one slot in the case of the control signal of regulation 1 as shown in Fig. 5), and again determines whether to transmit the packet or to suspend the transmission, on the basis of a new control signal.

Of course, much the same measure is also taken with the control signal 50C of regulation 2 and the control signal 50D of regulation 3. For example, on the occasion of transmission at the transmission timing t2, the mobile station 20 confirms that the control signal 50C of regulation 2 is broadcast in the download control channel, and determines whether to immediately transmit the packet or to suspend the transmission thereof, on the basis of a random number generated inside. When the transmission is suspended, the mobile station 20 stands by for the suspension time (three slots in the case of the control signal of regulation 2 as shown in Fig. 5).

As a consequence, the transmission power of the mobile station 20 varies stepwise as shown in the middle part of Fig. 4. In addition, the transmission power is controlled at a low level during periods in which the regulation signal of regulations 1-3 is broadcast because of high degree of interference.

The transmission procedure of the mobile station 20 will be described below with reference to Fig. 6. Prior to transmission of a packet, the mobile station 20 receives the downlink control channel (S11) and determines whether to transmit the packet or to suspend the transmission thereof, based on the transmit probability of Fig. 5 corresponding to the regulation signal broadcast at that point from the base station 10 and based on a random number generated in the mobile station 20 (S12). When the mobile station 20 determines the suspension of transmission herein, the mobile station 20 stands by for the suspension time of Fig. 5 corresponding to the foregoing regulation signal (S13). After the standby, the mobile station 20 returns to S 11 to repeat the transmission operation on the basis of the signal of the downlink control channel.

On the other hand, when the mobile station 20 determines execution of transmission in S12, the mobile station 20 immediately starts transmitting the packet (S14) and then determines whether there is a subsequent packet (S15). When there is a subsequent packet, the mobile station 20 stands by for the predetermined period of time (the shift time) (S16). After the standby, the mobile station 20 returns to S11 to repeat the transmission operation on the basis of the signal of the downlink control channel.

The above operation of Fig. 6 is **characterized in that** it is carried out before completion of transmission of a packet and concurrently in tandem with transmission of the packet. If there is no subsequent packet in S15, the processing of Fig. 6 is terminated.

In the first example above, the shift of the transmission start times causes the packets to be transmitted in an overlapping state, and the number of overlapping packets gradually increases from the start of transmission; therefore, the transmission power in the radio channel can be increased stepwise. Namely, the present embodiment utilizes the suspension time and the shift time separately and S13 is configured to stand by for the suspension time, thereby achieving the peculiar effect that it is feasible to avoid the congestion of packet transmissions and to prevent excessive interference to the other packets under transmission. In addition, S16 is configured to stand by for the shift time, thereby achieving the peculiar effect that it is feasible to secure the time enough to execute the transmission power control consistent with increase of interference waves and thereby decrease the error rate of packets.

Since the shift amount of the transmission time (shift time) is set longer than the period of the transmission power control, the transmission power of each packet increases or decreases in a step greater than the period of the transmission power control. When the other packets under transmission are subjected to the transmission power control, the influence of interference waves due to the other packets under transmission can be avoided, regardless of whether the source of the interference waves is located inside or outside the cell. It is also feasible to avoid, after transmission of an arbitrary packet, continuously transmitting the other packets under transmission in the transmission powers stronger than necessary and thereby increase the frequency efficiency.

It also becomes feasible to decrease the interference level in the radio channel, by suspending the transmission of the packet or lengthening the shift time as a shift width of the transmission start times according to the regulation signal. For example, in the case where the receive channel suffers too strong interference to be avoided even by the transmission power control, the traffic load of the radio station is lowered down to an appropriate value, which can prevent the error rate of packets from seriously increasing.

### [Second Example]

The second example will describe an example not forming part of the invention directed to the second random access method and to the radio station and CDMA communication system corresponding thereto. A system configuration example assumed herein is the one shown in Fig. 1, as in the first example.

Fig. 2B shows a configuration according to the present example in the mobile station 20 of the present example. When compared with the aforementioned configuration of the first example, the mobile station 20 shown in this Fig. 2B is provided with a transmission rate controller 23B for, on the occasion of continuously transmitting a plurality of packets, performing such control as to gradually increase the transmission rate of each packet, instead of the start time controller 23A. The mobile station 20 is also provided with a second transmission regulation controller 29B for, when receiving a transmission regulation signal from another radio station during packet transmission, performing such control as to suspend transmission of a new packet or lower the transmission rate of a subsequent packet on the basis of the contents indicated by the transmission regulation signal, instead of the first transmission regulation controller 29A.

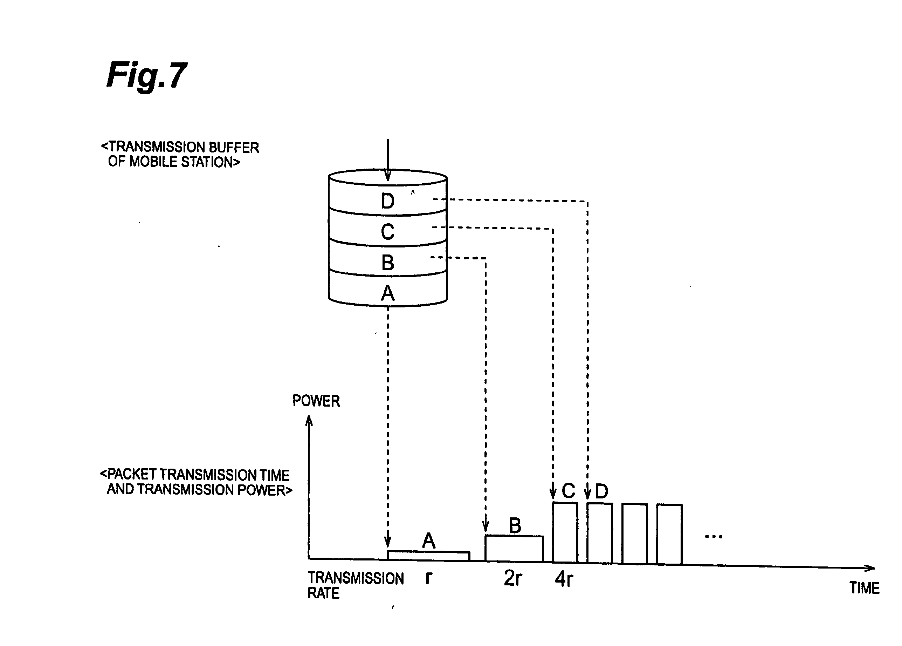

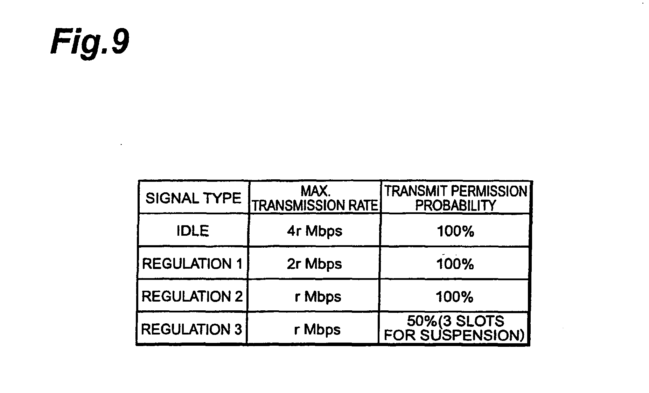

Fig. 7 shows the operation of packet transmission in the present example. Now let us suppose that transmitted packets A to D are stored in the transmission buffer in the packet generator 25 of the mobile station 20, as shown in the upper part of Fig. 7. As shown in the lower part of Fig. 7, the mobile station 20 first transmits the packet A at an initial transmission rate r preliminarily determined. Then the mobile station 20 transmits the packet B at a rate equal to double the initial transmission rate r. Thereafter, the mobile station 20 continuously transmits packets while gradually increasing the transmission rate so as to double the packet transmission rate immediately before up to the maximum transmission rate shown in Fig. 9. Although this example shows the increase of the transmission rate per transmitted packet, it is also possible to employ a method of increasing the transmission rate per two, four, eight,... transmitted packets in consideration of the period of the transmission power control, because the packet transmission time becomes shorter with increase of the transmission rate.

As a consequence, as shown in the lower part of Fig. 7, the transmission power of the mobile station 20 is in a gently stepped state, as in the case of the first example.

Although the present example describes the transmission from the mobile station 20, it is needless to mention that this transmission method is also applicable to transmission from the base station 10.

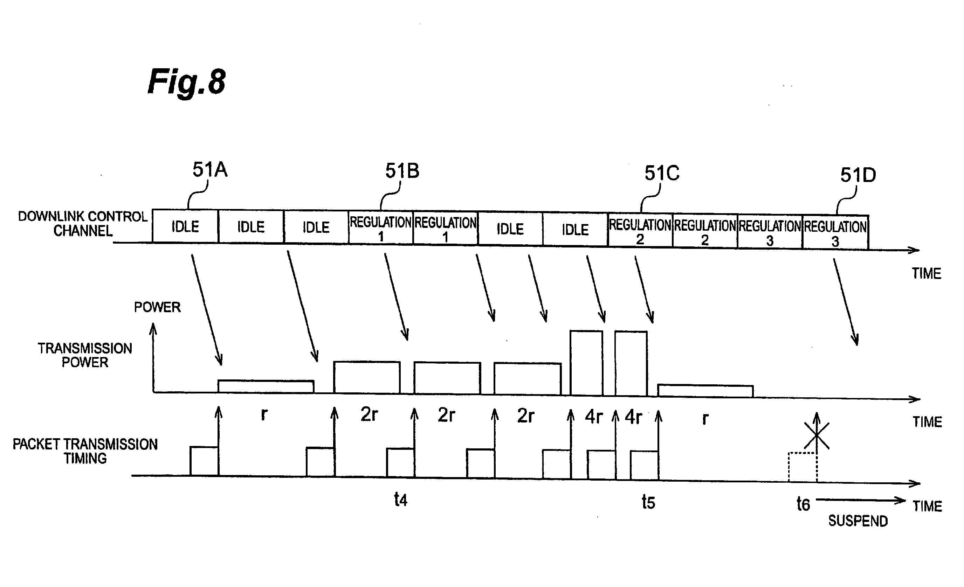

The outline of the operation for preventing abnormal increase of the interference waves due to congestion of packets will be described below with reference to Figs. 8 and 9. The base station 10 broadcasts the downlink control channel shown in the upper part of Fig. 8, and the base station 10 selectively transmits one of an idle control signal 51A, a control signal 51B of regulation 1, a control signal 51C of regulation 2, and a control signal 51D of regulation 3 according to the intensity of the reception power in the uplink channel.

The mobile station 20 refers to the broadcast control signal upon transmission of each packet and performs the packet transmission while adjusting the transmission rate so that it falls within a range below the maximum transmission rate described in Fig. 9 and becomes equal to double the packet transmission rate immediately before, as described previously.

For example, on the occasion of transmission at the transmission timing t4 in the lower part of Fig. 8, the mobile station 20 confirms that the control signal 51B of regulation 1 is broadcast in the downlink control channel, and, because the maximum transmission rate is defined as 2r in Fig. 9, the mobile station 20 continues to transmit the next packet at the transmission rate 2r as well, though the packet transmission rate immediately before is 2r.

When confirming that the control signal 51C of regulation 2 is broadcast at the transmission timing t5, the mobile station 20 transmits the next packet at the transmission rate lowered from 4r to r, because the maximum transmission rate is defined as r in Fig. 9, though the packet transmission rate immediately before is 4r.

When it is confirmed that the control signal 51D of regulation 3 is broadcast at the transmission timing t6, the transmit permission probability is taken into consideration, in addition to the transmission rate, with reference to Fig. 9 and, as in the case of the first embodiment, the mobile station 20 determines whether to immediately transmit the packet or to suspend the transmission thereof, on the basis of a random number generated inside. When the transmission is suspended, the mobile station 20 stands by for the suspension time (three slots in the case of the control signal of regulation 3 as shown in Fig. 9) and then again determines whether to transmit the packet or to suspend the transmission thereof, on the basis of a new control signal.

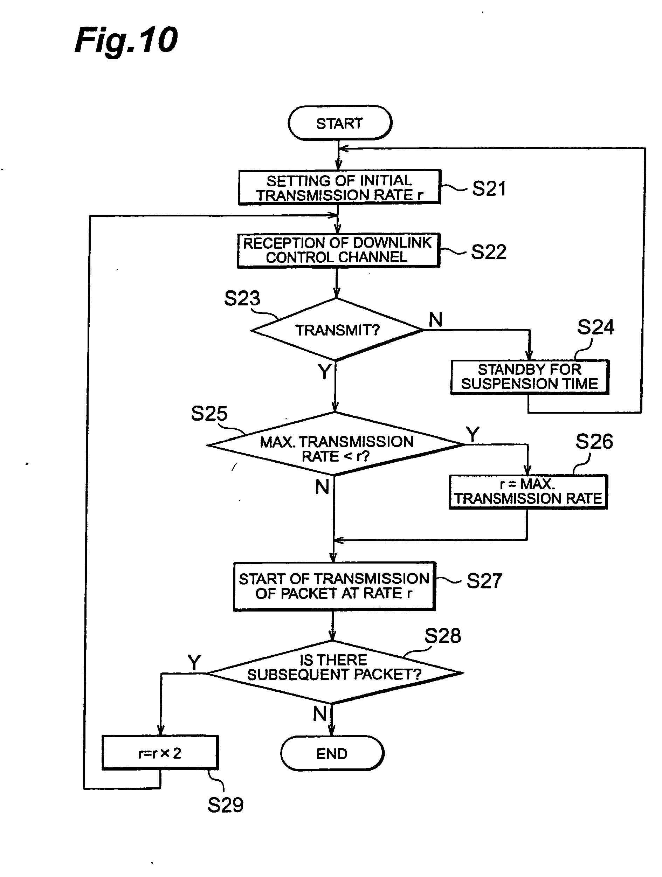

The transmission procedure of the mobile station 20 will be described below with reference to Fig. 10. Prior to transmission of a packet, the mobile station 20 first sets the initial transmission rate r (S21) and then receives the downlink control channel (S22). The mobile station 20 determines whether to transmit the packet or to suspend the transmission thereof, based on the transmit probability of Fig. 9 corresponding to the regulation signal broadcast at that point from the base station 10 and based on a random number generated in the mobile station 20 (S23). When the mobile station 20 determines the suspension herein, it stands by for the suspension time of Fig. 9 (three slots in the case of the control signal of regulation 3) corresponding to the above regulation signal (S24). After the standby, the mobile station 20 returns to S21 to repeat the transmission operation from the setting of the initial transmission rate.

On the other hand, when the mobile station 20 determines execution of the transmission in S23, it determines whether the transmission rate (r) set at this point exceeds the maximum transmission rate (S25). When the transmission rate (r) exceeds the maximum transmission rate herein, the mobile station 20 sets the transmission rate (r) to the maximum transmission rate defined in Fig. 9 (S26). This makes it feasible to keep the transmission rate (r) from exceeding the maximum transmission rate.

Then the mobile station 20 starts transmitting the packet at the transmission rate (r) set at this point (S27), and determines whether there is a subsequent packet (S28). When there is a subsequent packet, the mobile station 20 sets the transmission rate to double the transmission rate (r) set at this point (S29). After the setting, the mobile station 20 returns to S22 to repeat the transmission operation on the basis of the signal of the downlink control channel. When there is no subsequent packet in S28, the processing of Fig. 10 is terminated.

In the second example above, the transmission rate is gradually increased by making use of the fact that the required transmission power varies according to the transmission rate in the CDMA packets; therefore, the transmission power in the radio channel can be increased stepwise. For this reason, it becomes feasible to prevent excessive interference to the other packets under transmission and also to secure the time enough to execute the transmission power control consistent with increase of interference waves, whereby the error rate of packets can be decreased.

By performing the control to suspend the packet transmission itself or adjust the transmission rate, it becomes feasible to decrease the interference level in the radio channel. For example, in the case where the receive channel suffers too strong interference to be avoided even by the transmission power control, the traffic load of the mobile station 20 is lowered down to an appropriate value, whereby the error rate of packets can be prevented from seriously increasing.

### [The Embodiment]

The embodiment will describe an embodiment according to the present invention directed to the third random access method and to the radio station and CDMA communication system corresponding thereto. A system configuration example assumed herein is the one shown in Fig. 1, as in the first example.

Fig. 2C shows a configuration according to the present invention in the mobile station 20 in the present embodiment. When compared with the aforementioned configuration of the first example, the mobile station 20 shown in this Fig. 2C is provided with a number-of-transmitted-packets controller 23C for, on the occasion of concurrently and continuously transmitting a plurality of packets, gradually increasing the number of packets concurrently transmitted, instead of the start time controller 23A. The mobile station 20 is also provided with a third transmission regulation controller 29C for, when receiving a transmission regulation signal from another radio station during packet transmission, performing such control as to suspend transmission of a new packet or decrease the number of packets simultaneously transmitted, on the basis of the contents indicated by the transmission regulation signal, instead of the first transmission regulation controller 29A.

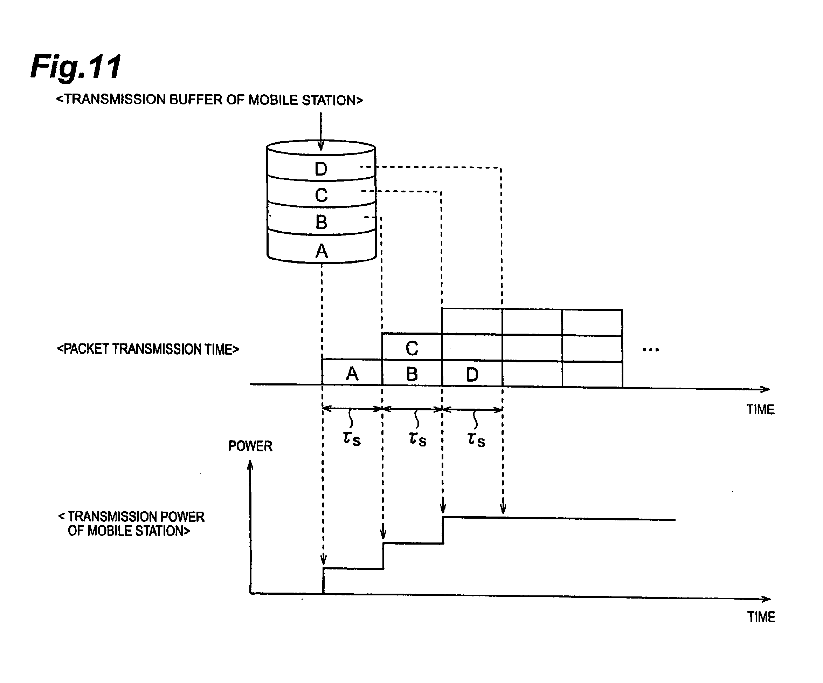

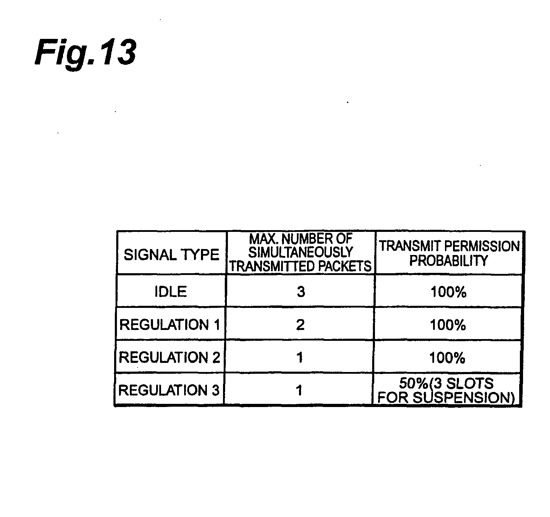

Fig. 11 shows the operation of packet transmission in the present embodiment. Now let us suppose that transmitted packets A to D are stored in the transmission buffer in the packet generator 25 of the mobile station 20, as shown in the upper part of Fig. 11. As shown in the middle part of Fig. 11, the mobile station 20 first sets the packet multiplicity to the initial number of transmitted packets preliminarily determined (one herein) and starts transmitting the packet A. After the predetermined time τₛ, the mobile station 20 sets the packet multiplicity to "the initial number of transmitted packets + 1" and starts transmitting packets (packets B, C). Thereafter, before arrival at the maximum number of simultaneously transmitted packets shown in Fig. 13, packets are code-multiplexed by the number resulting from addition of 1 to the packet multiplicity immediately before, and transmission of packets is continuously carried out while gradually increasing the packet multiplicity. The packet multiplicity is increased by one per packet transmission herein, but it is also possible to adopt a method of increasing the packet multiplicity every n packet transmissions (n is an integer greater than 2), in consideration of the period of the transmission power control.

As a consequence, as shown in the lower part of Fig. 11, the transmission power of the mobile station 20 is in a gently stepped state, as in the first embodiment.

Although the present example describes the transmission from the mobile station 20, it is needless to mention that this transmission method is also applicable to transmission from the base station 10.

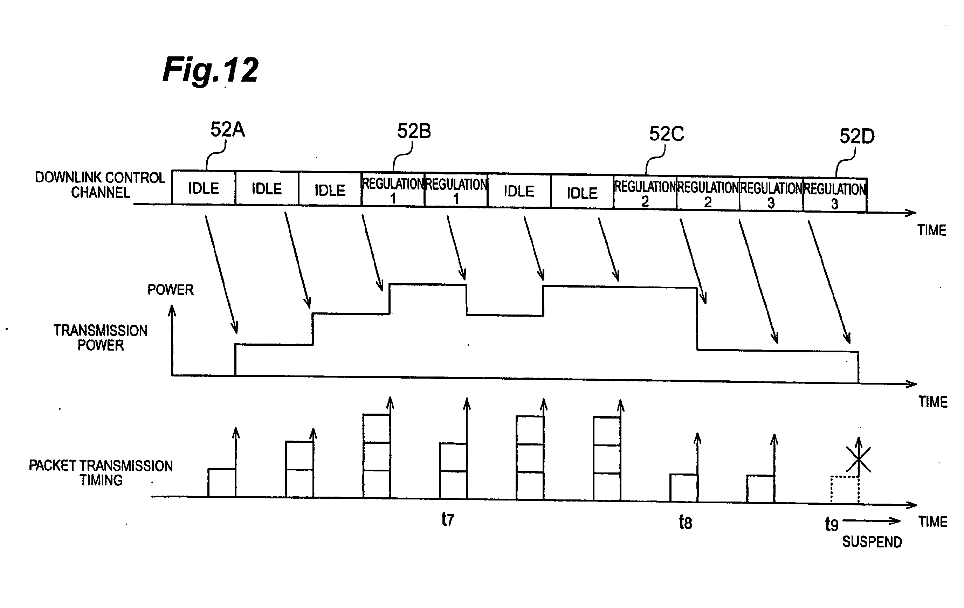

The outline of the operation for preventing abnormal increase of the interference waves due to congestion of packets will be described below with reference to Figs. 12 and 13. The base station 10 broadcasts the downlink control channel shown in the upper part of Fig. 12, and the base station 10 selectively transmits one of an idle control signal 52A, a control signal 52B of regulation 1, a control signal 52C of regulation 2, and a control signal 52D of regulation 3 according to the intensity of the reception power in the uplink channel.

The mobile station 20 refers to the broadcast control signal upon transmission of a packet and transmits the packet while adjusting the number of simultaneously transmitted packets in the range below the maximum number of simultaneously transmitted packets described in Fig. 13 and to "the number of simultaneously transmitted packets + 1" of the packet(s) immediately before, as described previously.

For example, on the occasion of transmission at the transmission timing t7 in the lower part of Fig. 12, the mobile station 20 confirms that the control signal 52B of regulation 1 is broadcast in the downlink control channel. Since the maximum number of simultaneously transmitted packets is defined as 2 in Fig. 13, the mobile station 20 transmits the packets while setting the number of simultaneously transmitted packets to 2 on the basis of the rule of Fig. 13, though the number of simultaneously transmitted packets immediately before is 3.

When it is confirmed that the control signal 52C of regulation 2 is broadcast at the transmission timing t8, though the number of simultaneously transmitted packets immediately before is 3, the mobile station 20 transmits the packet while setting the number of simultaneously transmitted packets to 1 on the basis of the rule of Fig. 13, because the maximum number of simultaneously transmitted packets is defined as 1 in Fig. 13.

When it is confirmed that the control signal 52D of regulation 3 is broadcast at the transmission timing t9, the mobile station 20 gives consideration to the transmit permission probability, in addition to the transmission rate, with reference to Fig. 13, and determines whether to immediately transmit the packet or to suspend the transmission thereof, on the basis of a random number generated inside, as in the first example. When the transmission is suspended, the mobile station 20 stands by for the suspension time (three slots in the case of the control signal of regulation 3 as shown in Fig. 13) and then again determines whether to transmit it or to suspend on the basis of a new control signal.

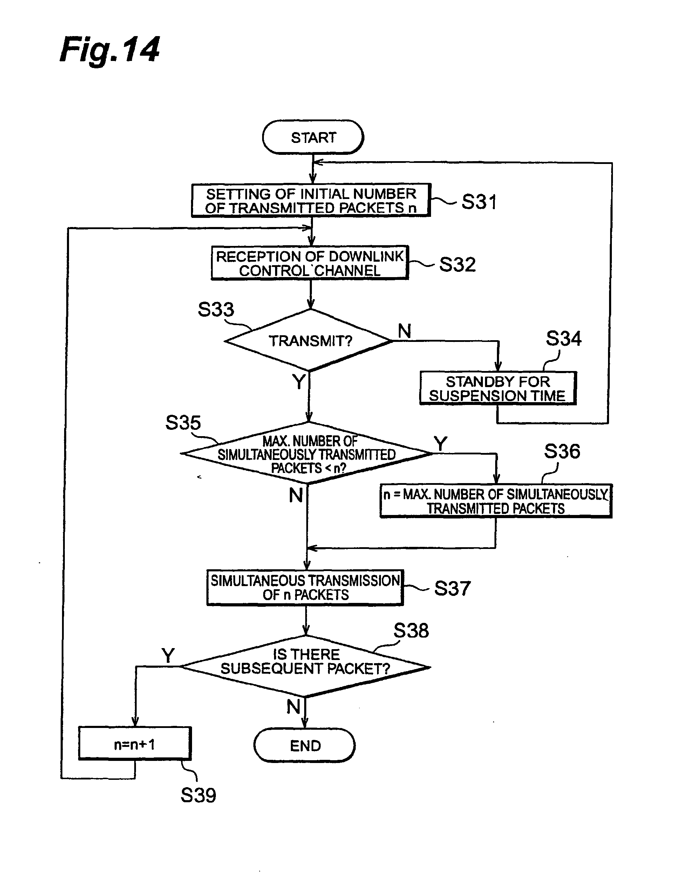

The transmission procedure of the mobile station 20 will be described below with reference to Fig. 14. Prior to transmission of a packet, the mobile station 20 first sets the initial number of transmitted packets n (S31) and then receives the downlink control channel (S32). The mobile station 20 then determines whether to perform the transmission or to suspend the transmission, based on the transmit probability of Fig. 13 corresponding to the regulation signal broadcast at this point from the base station 10 and based on a random number generated in the mobile station 20 (S33). When the mobile station 20 determines the suspension herein, the mobile station 20 stands by for the suspension time of Fig. 13 (three slots in the case of the control signal of regulation 3) corresponding to the above regulation signal (S34). After the standby, the mobile station 20 returns to S31 to repeat the transmission operation from the setting of the initial number of transmitted packets.

On the other hand, when the mobile station 20 determines execution of the transmission in S33, it determines whether the number of simultaneously transmitted packets (n) set at this point exceeds the maximum number of simultaneously transmitted packets (S35). If the number of simultaneously transmitted packets (n) exceeds the maximum number of simultaneously transmitted packets, the number (n) is set to the maximum number defined in Fig. 13 (S36). This makes it feasible to keep the number of simultaneously transmitted packets (n) from exceeding the maximum number of simultaneously transmitted packets.

Then the mobile station 20 starts transmitting packets by the number of simultaneously transmitted packets (n) set at this point (S37) and then determines whether there is a subsequent packet (S38). When there is a subsequent packet, the number of simultaneously transmitted packets (n) is reset by adding 1 to the number of simultaneously transmitted packets (n) (S39). After the setting, the mobile station 20 returns to S32 to repeat the transmission operation on the basis of the signal of the downlink control channel. When there is no subsequent packet in S38, the processing of Fig. 14 is terminated.

In the embodiment above, the number of packets concurrently transmitted is gradually increased, whereby the transmission power in the radio channel can be increased stepwise. For this reason, it becomes feasible to prevent excessive interference to the other packets under transmission and also to secure the time enough to execute the transmission power control consistent with increase of interference waves, whereby the error rate of packets can be decreased.

By performing the control to suspend the packet transmission itself or decrease the number of packets simultaneously transmitted, it becomes feasible to decrease the interference level in the radio channel. For example, when the receive channel suffers too strong interference to be avoided even by the transmission power control, it becomes feasible to prevent the error rate of packets from seriously increasing, by decreasing the traffic load of the mobile station 20 to an appropriate value.

In the above example and embodiment, the packet transmission control operations in the mobile station 20 were described as operations associated with the random access method according to the present invention, but such operations are applicable to all the radio stations (including the base stations 10) configured to implement packet transmission in the CDMA packet communication system, while achieving like operation and effect.

According to an example, as described above, the transmission power in the channel can be increased stepwise in the CDMA packet communication system in which the frequency is shared by radio stations inside and outside the cell, whereby it becomes feasible to prevent excessive interference to packets under transmission and also to secure the time enough to execute the transmission power control consistent with increase of interference waves; therefore, it is feasible to decrease the error rate of packets.

By providing the means for controlling the packet traffic, it becomes feasible to avoid a state in which packets are heavily congested within a short period of time so that signals cannot be transmitted even at the maximum output because of increase of interference.

Furthermore, according to the invention, the transmission power is decreased stepwise both in the start period of packet transmission and in the end period of packet transmission and each radio station performs the transmission power control in conjunction therewith, whereby it is feasible to prevent occurrence of a state in which the transmission output becomes higher than necessary, and to increase the channel efficiency.

## Claims

1. A random access method executed in a CDMA packet communication system comprising a plurality of radio stations having a function of transmitting and receiving packets (S37) on a wireless section to and from each other by code division multiple access and a function of performing transmission power control during transmission and reception of packets, the method **characterized in that**
on the occasion of concurrently and continuously transmitting a plurality of packets, the radio station is gradually increasing the number of packets concurrently transmitted (S35, S39).

2. The random access method according to Claim 1, wherein the radio station determines whether a total reception power in a receive channel exceeds a predetermined threshold and, when the total reception power exceeds the threshold, the radio station broadcasts a transmission regulation signal for ordering a predetermined operation of regulating packet transmission, to neighbor radio stations, and
wherein each neighbor radio station in transmission of packets, when receiving the transmission regulation signal (S32), suspends transmission of a new packet (S34) or decreases the number of packets concurrently transmitted, on the basis of the contents indicated by the transmission regulation signal.

3. A radio station (20) having a function of transmitting and receiving packets on a wireless section (22) to and from another radio station by code division multiple access and a function of performing transmission power control during transmission and reception of packets, **characterized by**
said radio station comprising:
number-of-transmitted-packets controlling means (23C) for, on the occasion of concurrently and continuously transmitting a plurality of packets, gradually increasing the number of packets concurrently transmitted.

4. The radio station (20C) according to Claim 3, comprising:
reception power determining means (27) for determining whether a total reception power in a receive channel exceeds a predetermined threshold;
signal broadcasting means (28) for, when the total reception power exceeds the threshold, broadcasting a transmission regulation signal for ordering a predetermined operation of regulating packet transmission, to neighbor radio stations; and
third transmission regulation controlling means (29C) for, when receiving the transmission regulation signal from another radio station during packet transmission, performing such control as to suspend transmission of a new packet or decrease the number of packets concurrently transmitted, on the basis of the contents indicated by the transmission regulation signal.
waves.

## Patentansprüche

1. Zufall-Zugriffs-Verfahren, ausgeführt in einem CDMA-Paket-Kommunikationssystem aufweisend eine Mehrzahl von Funkstationen, die eine Funktion haben des Übertragens und Empfangens von Paketen (S37) auf einem Drahtlos-Abschnitt zu einander und von einander durch Code-Aufteilung-Vielfach-Zugriff und eine Funktion des Durchführens von Übertragungs-Leistungs-Kontrolle während Übertragung und Empfang von Paketen, das Verfahren **gekennzeichnet dadurch dass** zu der Gelegenheit des gleichzeitigen und kontinuierlichen Übertragens einer Mehrzahl von Paketen die Funkstation graduell die Anzahl von gleichzeitig übertragenen Paketen erhöht (S35, S39).

2. Zufall-Zugriffs-Verfahren gemäß Anspruch 1,
wobei die Funkstation ermittelt, ob eine gesamte Empfangs-Leistung in einem Empfangs-Kanal einen vorgegebenen Schwellwert übersteigt und, wenn die gesamte Empfangs-Leistung den Schwellwert übersteigt, die Funkstation ein Übertragungs-Regulierungs-signal zum Anweisen einer vorgegebenen Operation des Regulierens von Paket-Übertragung an benachbarte Funkstationen rundsendet, und
wobei jede benachbarte Funkstation in Übertragung von Paketen, wenn das Übertragungs-Regulierungs-Signal empfangen wird (S32), die Übertragung eines neuen Pakets aussetzt (S34) oder die Anzahl von gleichzeitig übertragenen Paketen verringert, auf der Basis der von dem Übertragungs-Regulierungs-Signal angezeigten Inhalte.

3. Funkstation (20), die eine Funktion hat des Übertragens und Empfangens von Paketen auf einem Drahtlos-Abschnitt (22) zu und von einer anderen Funkstation durch Code-Aufteilung-Vielfach-Zugriff und eine Funktion des Durchführens von Übertragungs-Leistungs-Kontrolle während Übertragung und Empfang von Paketen,
**gekennzeichnet dadurch dass**
die Funkstation aufweist:
Anzahl-der-übertragenen-Pakete-Kontroll-Mittel (23C) zum, zu der Gelegenheit des gleichzeitigen und kontinuierlichen Übertragens einer Mehrzahl von Paketen, graduell Erhöhen der Anzahl von gleichzeitig übertragenen Paketen.

4. Funkstation (20C) gemäß Anspruch 3, aufweisend:
Empfangs-Leistung-Ermittel-Mittel (27) zum Ermitteln, ob eine gesamte Empfangs-Leistung in einem Empfangs-Kanal einen vorgegebenen Schwellwert übersteigt;
Signal-Rundsende-Mittel (28) zum, wenn die gesamte Empfangs-Leistung den Schwellwert übersteigt, Rundsenden eines Übertragungs-Regulierungs-Signals zum Anweisen einer vorgegebenen Operation des Regulierens von Paket-Übertragung an benachbarte Funkstationen; und
Dritte Übertragungs-Regulierungs-Kontroll-Mittel (29C) zum, wenn das Übertragungs-Regulierungs-Signal von einer anderen Funkstation während Paketübertragung empfangen wird, Durchführen solcher Kontrolle, dass die Übertragung eines neuen Pakets ausgesetzt wird oder die Anzahl von gleichzeitig übertragenen Paketen verringert wird, auf der Basis der von dem Übertragungs-Regulierungs-Signal angezeigten Inhalte.

## Revendications

1. Procédé d'accès aléatoire exécuté dans un système de communication par paquets CDMA comprenant une pluralité de stations radio ayant une fonction consistant à transmettre et à recevoir des paquets (S37) sur une section sans fil vers et depuis chacune des autres par accès multiple par répartition en code et une fonction consistant à effectuer une commande de puissance de transmission pendant la transmission et la réception de paquets, le procédé **caractérisé en ce que**
à l'occasion de la transmission simultanée et continue d'une pluralité de paquets, la station radio augmente progressivement le nombre de paquets transmis simultanément (S35, S39).

2. Procédé d'accès aléatoire selon la revendication 1, **caractérisé en ce que** la station radio détermine si une puissance de réception totale dans un canal de réception dépasse un seuil prédéterminé et, lorsque la puissance de réception totale dépasse le seuil, la station radio diffuse un signal de régulation de transmission pour ordonner une opération prédéterminée visant à réguler la transmission de paquets, aux stations radio voisines, et
**caractérisé en ce que** chaque station radio voisine dans la transmission de paquets, lors de la réception du signal de régulation de transmission (S32), suspend la transmission d'un nouveau paquet (S34) ou diminue le nombre de paquets transmis simultanément, sur la base du contenu indiqué par le signal de régulation de transmission.

3. Station radio (20) ayant une fonction consistant à transmettre et à recevoir des paquets sur une section sans fil (22) à et en provenance d'une autre station radio par accès multiple par répartition en code et une fonction consistant à effectuer une commande de puissance de transmission pendant la transmission et la réception de paquets, **caractérisée par**
ladite station radio comprenant :
des moyens de commande du nombre de paquets transmis (23C) pour, à l'occasion de la transmission simultanée et continue d'une pluralité de paquets, augmenter progressivement le nombre de paquets transmis simultanément.

4. Station radio (20C) selon la revendication 3, comprenant :
des moyens de détermination de puissance de réception (27) pour déterminer si une puissance de réception totale dans un canal de réception dépasse un seuil prédéterminé ;
des moyens de diffusion de signal (28) pour, lorsque la puissance de réception totale dépasse le seuil, diffuser un signal de régulation de transmission pour ordonner une opération prédéterminée visant à réguler la transmission de paquets, aux stations radio voisines ; et
des troisièmes moyens de commande de régulation de transmission (29C) pour, lors de la réception du signal de régulation de transmission en provenance d'une autre station radio pendant la transmission de paquets, effectuer une telle commande de façon à suspendre la transmission d'un nouveau paquet ou diminuer le nombre de paquets transmis simultanément, sur la base du contenu indiqué par le signal de régulation de transmission.
